(19) Europäisches Patentamt
European Patent Office
Office européen des brevets

(11) Publication number: **0 138 541**
**A1**

# (12) EUROPEAN PATENT APPLICATION

(21) Application number: **84306837.0**

(22) Date of filing: **08.10.84**

(51) Int. Cl.⁴: **G 01 F 23/28**

(30) Priority: **06.10.83 GB 8326793**
**27.04.84 GB 8410906**

(43) Date of publication of application: **24.04.85**
**Bulletin 85/17**

(84) Designated Contracting States: **DE FR GB IT**

(71) Applicant: **LUCAS KIENZLE INSTRUMENTS LIMITED,**
**Wells Street, Birmingham B19 2XF (GB)**

(72) Inventor: **Rayner, Christopher Stephen, 33, Meadow Hill Road, Birmingham B38 8DF (GB)**
Inventor: **Mountis, Michael George, 3, Votsi Street, Paphos (CY)**

(74) Representative: **Harrison, Gordon Donald et al,**
**FORRESTER & BOEHMERT Widenmayerstrasse 4/I,**
**D-8000 München 22 (DE)**

## (54) Liquid level measurement.

(57) The depth of liquid in a tank, and preferably the volume or mass of such liquid, is determined by means of ultrasonic or like pulses which are transmitted through the liquid and reflected partly by the surface of the liquid and partly by one or more reference reflectors (16).

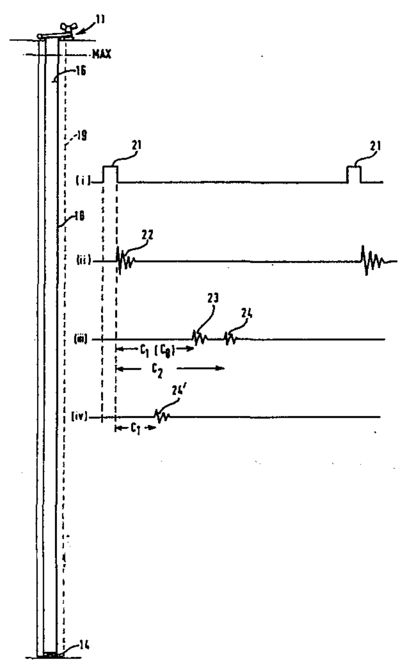


EP 0 138 541 A1

ACTORUM AG

Title: "Liquid Level Measurement"

This invention relates to a method of and apparatus for measurement of the level of liquid in a storage tank, and optionally the volume or mass of such liquid.

It has previously been proposed to obtain a measurement of the level of liquid in a storage tank by measuring the time taken for a transmitted ultrasonic pulse to be reflected from the surface of the liquid to a receiver, but such a method has several disadvantages in practice. For example, the measured time interval for a given depth of liquid is affected by variation in temperature and the nature of the liquid, and the relationship between the measured depth and the actual volume of liquid is in many cases non-linear due to the shapes of storage tanks commonly employed.

The problems involved in determining accurately the contents of a storage tank are particularly acute in the case of, for example, petrol delivery tankers, in that a depth gauging error of the order of 1mm may correspond to a volume of several litres of liquid.

According to one aspect of the invention, we provide a method of determining the level of liquid in a storage tank which comprises the steps of transmitting a series of sonic pulses through the liquid from a transmitter positioned at the bottom of the tank so that such pulses are on the one hand at least partially reflected from the surface of the liquid, and on the other hand at least partially reflected from a reflector positioned at a reference level above the transmitter whilst the level of the liquid is above said reflector, detecting such reflected pulses and measuring the time interval between a transmitted pulse and a first corresponding reflected pulse, determining whether any further corresponding reflected pulse is received from the same transmitted pulse in order to determine whether said first reflected pulse derives from said reflector or from the surface of the liquid, storing the value of the measured time interval for the first reflected pulse if a second reflected pulse is detected, at least on the first occasion that a reflected pulse is received in a series of measurements, to provide a reference value, and deriving from any second reflected pulse where such pulse is received from a given transmitted pulse, or from any first reflected pulse when no second reflected pulse is received from a given transmitted pulse, an output signal corresponding to the level of liquid in the tank.

In accordance with a preferred feature of the invention, the aforesaid method may additionally include the step of transmitting said series of sonic pulses so that such pulses are also at least partially reflected from an additional reflector positioned at a second reference level near to the bottom of the tank, detecting the additional reflected pulses produced by said additional reflector and measuring the time interval between a transmitted pulse and a corresponding additional reflected pulse, comparing the ratio of the measured time interval for such additional pulse to the known distance between said transmitter and said additional reflector with the ratio of the measured time interval for a reflected pulse from said first mentioned reflector to the known distance between said transmitter and said first mentioned reflector, and generating an alarm signal if the two ratios are significantly different.

By providing reference reflectors at high and low levels, it is possible to detect non-homogeneity in the liquid in the tank. If the liquid is homogeneous, the time interval between transmission and receipt of a reflected pulse will be directly proportional to the distance between the transmitter and the reflector concerned, so that the ratio of time interval to the distance should be the same for both reflectors. Any significant difference in this ratio as between the two reflectors is indicative of a non-homogeneity, for example an accumulation of sludge at the bottom of the tank.

Additionally, the provision of the second, low level reference reflector makes it possible continuously to compare each measurement pulse reflected from the surface of the liquid directly with at least one reference pulse over most of the operational range and until the level of liquid falls below the additional reflector, instead of relying over most of the operational range on a stored reference signal derived from the single reflector after the level of liquid has fallen below that reflector.

More specifically, in accordance with the invention, we provide a method of determining the level of liquid in a storage tank which comprises the steps of transmitting a series of sonic pulses through the liquid from transmitter means positioned at or adjacent to the bottom of the tank so that transmitted pulses are reflected at least partially from the surface of the liquid, at least partially from a high level reflector whilst the level of the liquid is above said reflector which is spaced above the transmitter means by a first reference distance, and at least partially from a low level reflector whilst the level of the liquid is above said reflector which is positioned at a second reference distance above the transmitter means, detecting such reflected pulses and measuring the time interval between transmitted pulses and corresponding reflected pulses, and whilst reflected pulses are being received from both of said reflectors, at least on the first occasion that both such reflected pulses are received in a series of measurements, comparing the ratio of the measured timè interval for return of a reflected pulse from said first reflector to said first reference distance with the ratio of the measured time interval for receipt of a reflected pulse from said second reflector to said second reference distance, and generating an alarm signal if the two ratios are significantly different, and deriving an output signal corresponding to the level of liquid in the tank by comparing the measured time interval for return of a reflected pulse from the surface of the liquid with the measured time interval for return of a reflected pulse from at least one of said reflectors.

The invention further resides in a method of monitoring the level or quantity of liquid in a storage tank during intermittent or continuous discharge thereof, comprising the steps of:-

(a) transmitting at least one reference pulse of sonic energy from a transducer positioned below the surface of the liquid towards a reference reflector positioned below the maximum permissible level of liquid in the tank at a predetermined spacing from said transducer, so as at least partially to reflect said reference pulse to detector means, and measuring the time interval between transmission of said reference pulse and receipt by said detector means of a reflected pulse from said reflector to provide a reference value;

(b) detecting the arrival at the same or different detector means of a further reflected pulse from the same or a different reference pulse from the surface of the liquid at its initial level, measuring the time interval between transmission of the reference pulse and receipt of the corresponding surface reflection pulse at the detector means to provide an initial value representative of the initial liquid level or quantity by reference to said reference value; and

(c) thereafter transmitting a series of measurement pulses so as to be reflected at least from the surface of the liquid and measuring the time interval between the transmission of each such pulse and receipt of the corresponding liquid surface reflection pulse to provide a measurement value representative of the subsequent liquid level or quantity.

The invention also specifically resides in a method of monitoring the level or quantity of liquid in a storage tank during intermittent or continuous discharge thereof, comprising the steps of:-

(a) transmitting at least one reference pulse of sonic energy from a transducer positioned below the surface of the liquid towards a first reference reflector positioned below the maximum permissible level of liquid in the tank at a predetermined first spacing from said transducer, so as at least partially to reflect such reference pulse to detector means, and measuring the time interval between transmission of such reference pulse and receipt by said detector means of a reflected pulse from said first reflector to provide a first reference value;

(b) transmitting at least one reference pulse of sonic energy from a transducer positioned below the surface of the liquid towards a second reference reflector positioned adjacent to the bottom of the tank at a predetermined second spacing from said transducer, so as at least partially to reflect such reference pulse to detector means, and measuring the time interval between transmission of such reference pulse and receipt by said detector means of a reflected pulse from said second reflector to provide a second reference value;

(c) detecting the arrival at the same, or different detector means of a further reflected pulse which derives from the same or a different reference pulse from the same or a different transducer after reflection from the surface of the liquid at its initial level, measuring the time interval between transmission of such reference pulse and receipt of the corresponding surface reflection pulse at the detector means to provide an initial value representative of the initial liquid level or quantity by reference to either or both of said reference values;

(d) comparing the ratio of such first reference value to said first spacing with the ratio of such second reference value to said second spacing and generating an alarm signal if the two ratios are significantly different; and

(e) thereafter transmitting a series of measurement pulses so as to be reflected at least from the surface of the liquid and measuring the time interval between the transmission of each such pulse and receipt of the corresponding liquid surface reflection pulse to provide a measurement value dependent on the subsequent liquid level and deriving an output signal representative of the liquid level or quantity by comparing said measurement value with said first and/or said second reference values or subsequently determined corresponding reference values.

Further, in accordance with the invention, we provide a method of determining the level of liquid in a storage tank which comprises the steps of transmitting a series of sonic pulses through the liquid from transmitter means positioned at or adjacent to the bottom of the tank so that transmitted pulses are reflected at least partially from the surface of the liquid, transmitting a series of sonic pulses laterally through the liquid from the same or different transmitter means and positioned at or adjacent to the bottom of the tank so that such pulses are at least partially reflected from a reference reflector positioned at a reference distance from the transmitter means, detecting such reflected pulses and measuring the time interval between transmitted pulses and corresponding reflected pulses, and deriving an output signal corresponding to the level of liquid in the tank by comparing the measured time interval for return of a reflected pulse from the surface of the liquid with the measured time interval for return of a reflected pulse from said reference reflector.

Preferably, the method also includes the steps of determining the temperature of the liquid during the measurement and applying any required compensation factor if the observed temperature changes between the establishment of the reference value and any subsequent measurement in the same series of measurements.

Since the reference value corresponds to a known path length, it is related to the density of the liquid, and accordingly the reference value and the measured temperature can be compared with stored values indicative of the density of various selected liquids over temperatures in a predetermined range, in order to provide an indication of the nature of the liquid, or its specific gravity. In this way, any build-up of sludge or contaminant in the tank may be detected. Thus, the method preferably includes the step of comparing the observed reference value with a stored datum value corresponding to the calculated time interval for a reflected pulse from said reflector for a specified liquid at the measured temperature and generating a warning signal in response to any significant discrepancy between the observed reference value and the datum value.

Whilst this method may be used to determine only the depth of the liquid, preferably the output signal is used to derive an indication of the volume or mass of liquid corresponding to the measured depth. For this purpose, the output signal may be applied to a memory device programmed according to the geometry of the tank to provide a volume or mass indication corresponding to the measured depth.

This may be achieved by an initial calibration procedure on installation whereby known volumes (or masses) of liquid of known density at a known temperature are fed into the tank and the output signal corresponding to the depth of such quantity of liquid is applied to a reference table in the computer memory which is preferably a non-volatile RAM. Intermediate values between the measured points can then be interpolated and also applied to the reference table.

If such values are plotted as a graph, the result is a characteristic curve for that tank, having a shape which is dependent on the geometry of the tank. The absolute values will vary according to the density of liquid by a factor which can readily be determined from the nature of the liquid and temperature and when measurements are made the computer programme can apply an appropriate correction factor corresponding to the specified liquid and the observed temperature.

The invention further resides in apparatus for determining the level of liquid in a storage tank comprising transducer means for transmitting pulses of sonic energy into the liquid, reference reflector means positioned below the maximum permitted level of liquid in the tank so as at least partially to reflect said pulses, detector means arranged to receive reflected pulses from the surface of the liquid and from said reflector means when the latter is immersed in the liquid, and timing means to measure the interval between transmission of each pulse and receipt of a corresponding reflected pulse by said detector means.

In accordance with the present invention, the aforesaid apparatus additionally includes a second reference reflector means positioned near to the bottom of the tank so as at least partially to reflect said pulses when said second reference reflector means is immersed in the liquid.

In a preferred arrangement, the transducer means and detector means are arranged at the lower end of a tube which is immersed in the liquid and is perforated or apertured so as to allow ingress of the liquid, and the or each reflector means comprises a plate which partially obstructs said tube so as partially to reflect pulses from the transducer means to the detector means. Most conveniently, the transducer means is arranged to serve as both transmitter and receiver.

Whilst a single transducer may be utilised to provide a common pulse which is partially reflected from the surface of the liquid and from one or both reference reflectors whilst they remain immersed in the liquid, in accordance with a further feature of the invention, it is preferred for the or each reflector to have a separate transducer associated therewith, and for an additional transducer to be used to generate pulses for reflection from the surface of the liquid. In a preferred arrangement, combined transducer and detector means are arranged at the lower ends of respective tubes which are perforated or apertured so as to allow free ingress of the liquid, one of said tubes being unobstructed and the remainder of said tubes each having a transverse plate which at least partially obstructs said tube so as at least partially to reflect pulses from the respective transducer and thereby serve as said reference reflector means. However, alternatively, two or three separate transducers and one or two appropriately disposed reflectors could be arranged within a single tube.

Preferably, the apparatus also includes a temperature sensor to determine the temperature of liquid in the tank.

These and other aspects of the present invention will now be described by way of example, with reference to the specific embodiment as illustrated in the accompanying drawings, wherein:-

FIGURE 1 illustrates one form of apparatus;

FIGURE 2 illustrates the various signals derived from the apparatus of Figure 1;

FIGURE 3 is a block diagram of the measurement system;

FIGURE 4 is a flow chart of the operations performed by the microcomputer;

FIGURE 5 illustrates a further embodiment of apparatus; and

FIGURE 6 illustrates the various signals derived from the apparatus of Figure 5.

Referring firstly to Figure 1, the apparatus most conveniently comprises a tube 10 which is provided at its upper end with any suitable means 11 to enable it to be fastened to the top of a tank. The tube would normally be of such a length so as to rest at its lower end on the bottom of the tank, but under some circumstances it would be possible for the lower end of the tube to be spaced above the bottom of the tank, for example in cases where the tank includes a sump which would not normally be emptied.

The tube 10 is apertured preferably over its entire height to allow the liquid to flow into and out of the tube so that the level within the tube corresponds to the level in the remainder of the tank, but desirably with a reduced incidence of short-term fluctuations due to movement of the liquid within the tank. Normally the tank itself will be fitted with a dip tube 19 to receive a conventional dipstick, the dip tube itself being perforated or apertured so as to allow substantially free ingress of liquid, and the apparatus in accordance with the invention is designed as an "ultrasonic dipstick" to be received within the dip tube 19 where the latter is provided in the tank. Such dip tube 19 may incorporate a perforated strip which preferably extends over the entire length of the tube and accounts for about 25% of the circumference.

An ultrasonic transducer 14, preferably in the form of a piezo-electric crystal, is disposed at the lower end of the tube 10 and arranged, when energised by an electric pulse at an appropriate frequency, to generate an ultrasonic pulse which is transmitted upwardly along the length of the tube 10 by means of the liquid therein.

At a position near the top of the tube 10, an internal reflector plate 16 is provided. This plate is arranged at a level which is below the maximum permitted level of liquid in the tank, and only partially obstructs the tube so that the ultrasonic pulses from the transducer 14 are partially reflected by the plate 16 whilst part of the pulse continues upwardly so as to be at least partially reflected from the surface of the liquid, when the latter is above the level of the plate 16.

Thus, when the tank is filled to a level above the plate 16, each transmitted pulse from the transducer 14 will give rise to a first reflection from the reflector plate 16 and a second reflection from the surface of the liquid, and these pulses will be received in turn by the transducer to produce a corresponding output signal. However, when the level of liquid in the tank is below the level of the reflector plate 16, each transmitted pulse will result in only one corresponding reflected pulse, this being from the surface of the liquid.

Referring now to Figures 2 and 3, a conventional pulse generator 20 provides a series of pulses 21 as shown at (i) in Figure 2 at intervals longer than the maximum possible interval between transmission of a pulse and receipt of a reflection thereof by the transducer 14. The pulses 21 are applied to the transducer which thereby generates corresponding ultrasonic pulses, each consisting of a short wave train 22 as shown at (ii) in Figure 2. Each transmitted pulse 22 may give rise to either two reflected pulses 23, 24 as shown at (iii) in Figure 2 or a single reflected pulse 24' as shown at (iv) in Figure 2. These pulses energise the transducer to produce corresponding output signals which are fed through amplifier/limiter 26 to a pulse detector 27. The latter is arranged to deliver an output to one of two gates 28A and 28B in a microcomputer 32, both of which were SET by the pulse from the pulse generator 20 as applied to the transducer 14. The output signal corresponding to the first reflected pulse, 23 or 25, is applied to gate 28A to RE-SET the latter, whilst the output from any second pulse 24 is applied to gate 28B to RE-SET that. The two gates are supplied with timing pulses from a clock generator 29, and when the gates are SET these timing pulses are supplied to respective counters 30 and 31 so as to provide a value indicative of the time taken for a pulse to be transmitted through the liquid and reflected back to the transducer.

In order to determine whether the time measured by the first counter 30 is applicable to a single reflected pulse 24' from the surface of the liquid below the level of the reflector, or the first of two pulses 23 and 24 reflected respectively from the reflector 16 and the surface of the liquid above the latter, the second counter 31 runs only up to a predetermined time limit, so that if counter 31 returns a value equal to this limit, it is re-set by the micro-computer 32 to which the outputs of the counters are fed.

In this way, when the tank is filled to the maximum permitted level, a series of pulses 22 from the transducer 14 will result in a corresponding series of reflected pulses 23 and 24, and the first counter 30 provides a reference figure corresponding to the known distance between the transducer and the reflector, whilst the second counter 31 will provide a value corresponding to the initial depth of liquid in the tank.

It will be understood that when two pulses are reflected:-

$$C_1 = k.D$$

where:-

$C_1$ is a count or accumulation of constant intervals of time derived from the first counter 30;

k is a constant proportional to the inverse of the velocity of sound in the liquid; and

D is the known distance between the transducer 14 and the reflector 16.

Likewise:-

$$C_2 = k.h$$

where:-

$C_2$ is the count from the second counter 31, and h is the unknown height of liquid above the transducer.

Thus:-

$$h = \frac{C_2}{C_1} \cdot D$$

When no second pulse is available, a stored value of a previously determined value of $C_1$, identified as $C_0$, can be used to derive the current value of h from the expression:

$$h = \frac{C_1}{C_0} \cdot D$$

These processes are shown in the flow chart of Figure 4.

In this way the height of the liquid surface above the transducer can be measured relative to a reference value which is determined at the beginning of each series of measurements. By providing in the micro-computer a memory area which stores the values of liquid volume or mass corresponding to measured heights, the micro-computer can derive an output which is fed to a display unit 34 giving a direct read-out of the measured quantity of liquid.

As a further refinement, the system prefereably includes means, such as a thermistor 35 for measuring the temperature of the liquid, such thermistor being connected to a temperature measuring circuit 36 which supplies the micro-computer 32 with a signal corresponding to the observed temperature. In this way, the computer can be programmed to make allowance for any change in temperature occurring after the reference value is measured.

Moreover, since the transmission velocity of the ultrasonic pulse in the liquid is dependent upon the specific gravity of the liquid, it is possible to store in the computer a range of datum values corresponding to the calculated reference values applicable to any particular liquid over a given range of temperatures, and thereby derive a warning signal if the observed reference value does not correspond to the stored datum value which would be applicable for the specified liquid at the observed temperature. In this way, an indication may be obtained if the liquid is becoming contaminated by sludge or other material, or indeed if the tank is filled with an incorrect liquid.

Whilst it is particularly convenient to employ a single transducer which functions as both transmitter and receiver, it will be appreciated that it would be possible to utilise separate transmitters and receivers. These may be arranged either directly alongside one another so that the transmitted pulses are reflected normally, i.e. perpendicularly. Likewise, whilst in the embodiment illustrated in Figure 1 all pulses are generated by the same transducer, it is possible to use one transducer which directs reference pulses to only the reference reflector, and a separate transducer for measurement pulses which are directed only to the surface of the liquid. In that event, both transducers could be energised simultaneously or alternately, or in any other predetermined relation. A preferred embodiment of this kind of apparatus is illustrated in Figure 5.

As shown in Figure 5, the apparatus most conveniently comprises a set of three tubes 10a, 10b, 10c which are connected at their lower ends to a housing 12 containing respective ultrasonic transducers 14a, 14b, 14c disposed at the lower ends of the tubes. The tubes are so dimensioned as to be accommodated within any dip tube (not shown) fitted in the tank as shown in Figure 1 and are suitably apertured to allow ingress of liquid so that the level of liquid in the tubes corresponds to that in the tank itself. Tube 10a is provided at its upper end with any suitable means 11 to enable it to be fastened to the top of a tank. The tube would normally be of such a length that the housing 12 rests on the bottom of the tank, but under some circumstances it would be possible for the housing to be spaced above the bottom of the tank, for example in cases where the tank includes a sump which would not normally be emptied.

The tube 10b is somewhat shorter than tube 10a and terminates near the upper end of tube 10a in a reflector plate 16b which at least partially obstructs the tube 10b so that ultrasonic pulses from the corresponding transducer 14b are at least partially reflected by the plate 16b whilst it is immersed in liquid. The plate 16b is spaced from the corresponding transducer 14b by a first reference distance $D_H$.

The remaining tube 10c is substantially shorter than tube 10b and terminates at a position near to the bottom of the tank in a reflector plate 16c which at least partially obstructs the tube so that the ultrasonic pulses from the corresponding transducer 14c are at least partially reflected by the plate whilst it is immersed in the liquid. The spacing of the plate 16c above the corresponding transducer 14c corresponds to a second reference distance $D_L$.

The three transducers 14a, 14b and 14c are energised either simultaneously or in sequence by electric pulses 21 at an appropriate frequency to generate ultrasonic pulses 22 which are transmitted upwardly along the corresponding tube through the liquid therein, so as to be partially reflected by the surface of the liquid and/or the corresponding reflector plate as appropriate. Figure 6 illustrates the resulting pulses in a case where the three transducers are energised simultaneously.

Thus, when the tank is filled to a level above the high level reference plate 16b, as shown at (iii) in Figure 6, each transmitted pulse 22b from the first reference transducer 14b will give rise to a reflection 23 only from the reflector plate 16b. Likewise, each transmitted pulse from the second reference transducer 14c will give rise only to a reflection 25 from the reflector plate 16c. The time interval between transmission of a pulse and receipt of a corresponding reflected pulse can be determined in any suitable manner, for example by the counting technique previously described, to provide measured reference values $C_H$ and $C_L$ corresponding to the time interval corresponding to receipt of reflected pulses from the reflector plates 16b and 16c respectively.

If the liquid is homogeneous, the ratio of $C_H$ to $D_H$ will be equal to the ratio of $C_L$ to $D_L$. These ratios can be determined and compared electronically, and if they are not substantially equal, an alarm signal can be generated in any appropriate manner in order to indicate that the liquid is non-homogeneous.

Pulses from the measurement transducer 14a are transmitted through the liquid in tube 10a and reflected only from the surface of the liquid within that tube. The unknown height of the liquid ($D_X$) which is to be determined can be obtained by comparing the time interval ($C_X$) with either or both of the reference values $C_H$ or $C_L$. These reference values can be determined in an initial callibration operation when the tank is full, and the values stored for subsequent comparison with the measured value ($C_X$). Alternatively, the reference values can be continuously updated during emptying of the tank by repeated measurement. In that event, it will be necessary to compare the measured time intervals $C_H$, $C_L$ as determined by the reference transducers 14b and 14c with the measured time interval ($C_X$) determined by the measurement transducer 14a, and reject any measurement from transducers 14b and 14c which is not less than the measurement derived from transducer 14a at the same time in order to eliminate pulses, shown for example as pulse 23b' at (iv) in Figure 6, reflected to the reference transducers 14b and 14c from the surface of liquid within the tubes 10b and 10c when the level of the liquid is below that of the respective reference plates 16b, 16c.

The measured time interval $C_R$ relating to the reference currently in use is related to the corresponding reference spacing $D_R$ by the expression:

$$C_R = K \cdot D_R \quad \text{or} \quad K = C_R/D_R$$

The measured time interval $C_X$ relating to the unknown depth of liquid is related to the actual depth $D_X$ by the expression:

$$C_X = K \cdot D_X \quad \text{or} \quad D_X = C_X/K$$

It therefore follows that the unknown depth $D_X$ is related to the current reference spacing $D_R$ by the expression:

$$D_X = \frac{C_X}{C_R} \cdot D_R$$

The three transducers 14a, 14b and 14c, may be energised simultaneously from a common electric pulse, or sequentially from different pulses from the same pulse generator. Instead of employing three separate transducers, it would be possible to utilise a single transducer, and instead of employing three separate tubes, it would be possible to utilise a single tube with two separate reflector plates mounted therein at the appropriate levels.

Likewise, it would be possible to employ separate receivers for pulses reflected from the reference reflector and for pulses reflected from the surface of the liquid, for example by angling the reflector to direct reflections from it to a second receiver spaced laterally from a transmitter/receiver transducer. In that event, the two counters could be respectively dedicated to corresponding receivers.

Instead of, or in addition to, employing high and low level reflector plates, it would be possible to employ a horizontal tube near the bottom of the tank with an end reflector plate and either its own associated transducer or an angled reflector associated with the transducer which is arranged to direct pulses upwardly to the surface of the liquid. In either case, a reference signal will be obtained until the tank is substantially empty and the absence of such a reference signal provides an indication that the tank is effectively empty.

Whilst it is preferred to mount the reflector plates in one or more tubes, it would be possible to omit the tubes and mount the transducers and reflector plates directly on the tank or, for example, on a rod or other support immersed in the tank, either semi-permanently or intermittently in the manner of a dip-stick.

In a still further arrangement in accordance with the broader aspects of the invention, it would be possible for the reference value to be determined by a transducer arranged to reflect a pulse, for example, off a lateral wall of the tank, so that the reference distance then corresponds to a specified lateral dimension of the tank, with a separate transducer being employed to determine the depth of liquid. In such an arrangement, the reference transducer could be positioned near the bottom of the tank so that the reference value could be checked continuously until the tank is almost completely discharged, instead of only when it is nearly full, as in the preferred embodiment described and illustrated above.

In accordance with the invention, an accurate measurement of the quantity of liquid in a tank can be determined at any stage during the discharge of liquid, at least down to the level of the transducer. However, conversely, it is also possible in accordance with the invention to monitor the level of liquid whilst the tank is being filled. It will be appreciated that the reference value will not be established until the tank is filled up to the level of the reflector plate, so that values determined before the level reaches this height would be uncalibrated and hence only approximate. However, once the reference value is established, this would enable measurement of the quantity of liquid to be accurately determined during the final stages of filling.

Furthermore, whilst in the preceding description ultrasonic pulses are referred to, it will be appreciated that any appropriate frequency may be chosen, whether in the audible or ultrasonic ranges and the term "sonic" as used herein is to be construed accordingly.

The features disclosed in the foregoing description, the following claims or the accompanying drawings, expressed in their specific forms or in terms of a means for performing the disclosed function, or a method or process for attaining the disclosed result, may, separately or in any combination of such features, be utilised for realising the invention in diverse forms thereof.

CLAIMS:

1. A method of determining the level of liquid in a storage tank which comprises the steps of transmitting a series of sonic pulses through the liquid from a transmitter positioned at the bottom of the tank so that such pulses are on the one hand at least partially reflected from the surface of the liquid, and on the other hand at least partially reflected from a reflector positioned at a reference level above the transmitter whilst the level of the liquid is above said reflector, detecting such reflected pulses and measuring the time interval between a transmitted pulse and a first corresponding reflected pulse, determining whether any further corresponding reflected pulse is received from the same transmitted pulse in order to determine whether said first reflected pulse derives from said reflector or from the surface of the liquid, storing the value of the measured time interval for the first reflected pulse if a second reflected pulse is detected, at least on the first occasion that a reflected pulse is received in a series of measurements, to provide a reference value, and deriving from any second reflected pulse where such pulse is received from a given transmitted pulse, or from any first reflected pulse when no second reflected pulse is received from a given transmitted pulse, an output signal corresponding to the level of liquid in the tank.

2. A method according to Claim 1 additionally including the step of transmitting said series of sonic pulses so that such pulses are also at least partially reflected from an additional reflector positioned at a second reference level near to the bottom of the tank, detecting the additional reflected pulses produced by said additional reflector and measuring the time interval between a transmitted pulse and a corresponding additional reflected pulse, comparing the ratio of the measured time interval for such additional pulse to the known distance between said transmitter and said additional reflector with the ratio of the measured time interval for a reflected pulse from said first mentioned reflector to the known distance between said transmitter and said first mentioned reflector, and generating an alarm signal if the two ratios are significantly different.

3. A method of determining the level of liquid in a storage tank which comprises the steps of transmitting a series of sonic pulses through the liquid from transmitter means positioned at or adjacent to the bottom of the tank so that transmitted pulses are reflected at least partially from the surface of the liquid, at least partially from a high level reflector whilst the level of the liquid is above said reflector which is spaced above the transmitter means by a first reference distance, and at least partially from a low level reflector whilst the level of the liquid is above said reflector which is positioned at a second reference distance above the transmitter means, detecting such reflected pulses and measuring the time interval between transmitted pulses and corresponding reflected pulses, and whilst reflected pulses are being received from both of said reflectors, at least on the first occasion that both such reflected pulses are received in a series of measurements, comparing the ratio of the measured time interval for return of a reflected pulse from said first reflector to said first reference distance with the ratio of the measured time interval for receipt of a reflected pulse from said second reflector to said second reference distance, and generating an alarm signal if the two ratios are significantly different, and deriving an output signal corresponding to the level of liquid in the tank by comparing the measured time interval for return of a reflected pulse from the surface of the liquid with the measured time interval for return of a reflected pulse from at least one of said reflectors.

4. A method of monitoring the level or quantity of liquid in a storage tank during intermittent or continuous discharge thereof, comprising the steps of:-

(a) transmitting at least one reference pulse of sonic energy from a transducer positioned below the surface of the liquid towards a reference reflector positioned below the maximum permissible level of liquid in the tank at a predetermined spacing from said transducer, so as at least partially to reflect said reference pulse to detector means, and measuring the time interval between transmission of said reference pulse and receipt by said detector means of a reflected pulse from said reflector to provide a reference value;

(b) detecting the arrival at the same or different detector means of a further reflected pulse from the same or a different reference pulse from the surface of the liquid at its initial level, measuring the time interval between transmission of the reference pulse and receipt of the corresponding surface reflection pulse at the detector means to provide an initial value representive of the initial liquid level or quantity by reference to said reference value; and

(c) thereafter transmitting a series of measurement pulses so as to be reflected at least from the surface of the liquid and measuring the time interval between the transmission of each such pulse and receipt of the corresponding liquid surface reflection pulse to provide a measurement value representative of the subsequent liquid level or quantity.

5. A method of monitoring the level or quantity of liquid in a storage tank during intermittent or continuous discharge thereof, comprising the steps of:-

(a) transmitting at least one reference pulse of sonic energy from a transducer positioned below the surface of the liquid towards a first reference reflector positioned below the maximum permissible level of liquid in the tank at a predetermined first spacing from said transducer, so as at least partially to reflect such reference pulse to detector means, and measuring the time interval between transmission of such reference pulse and receipt by said detector means of a reflected pulse from said first reflector to provide a first reference value;

(b) transmitting at least one reference pulse of sonic energy from a transducer positioned below the surface of the liquid towards a second reference reflector positioned adjacent to the bottom of the tank at a predetermined second spacing from said transducer, so as at least partially to reflect such reference pulse to detector means, and measuring the time interval between transmission of such reference pulse and receipt by said detector means of a reflected pulse from said second reflector to provide a second reference value;

(c) detecting the arrival at the same, or different detector means of a further reflected pulse which derives from the same or a different reference pulse from the same or a different transducer after reflection from the surface of the liquid at its initial level, measuring the time interval between transmission of such reference pulse and receipt of the corresponding surface reflection pulse at the detector means to provide an initial value representative of the initial liquid level or quantity by reference to either or both of said reference values;

(d) comparing the ratio of such first reference value to said first spacing with the ratio of such second reference value to said second spacing and generating an alarm signal if the two ratios are significantly different; and

(e) thereafter transmitting a series of measurement pulses so as to be reflected at least from the surface of the liquid and measuring the time interval between the transmission of each such pulse and receipt of the corresponding liquid surface reflection pulse to provide a measurement value dependant on the subsequent liquid level and deriving an output signal representative of the liquid level or quantity by comparing said measurement value with said first and/or said second reference values or subsequently determined corresponding reference values.

6. A method of determining the level of liquid in a storage tank which comprises the steps of transmitting a series of sonic pulses through the liquid from transmitter means positioned at or adjacent to the bottom of the tank so that transmitted pulses are reflected at least partially from the surface of the liquid, transmitting a series of sonic pulses laterally through the liquid from the same or different transmitter means and positioned at or adjacent to the bottom of the tank so that such pulses are at least partially reflected from a reference reflector positioned at a reference distance from the transmitter means, detecting such reflected pulses and measuring the time interval between transmitted pulses and corresponding reflected pulses, and deriving an output signal corresponding to the level of liquid in the tank by comparing the measured time interval for return of a reflected pulse from the surface of the liquid with the measured time interval for return of a reflected pulse from said reference reflector.

7. A method according to any one of the preceding claims including the steps of determining the temperature of the liquid during the measurement and applying any required compensation factor if the observed temperature changes between the establishment of the reference value and any subsequent measurement in the same series of measurements.

8. A method according to any one of the preceding claims including the step of comparing the observed reference value with a stored datum value corresponding to the calculated time interval for a reflected pulse from said reflector for a specified liquid at the measured temperature and generating a warning signal in response to any significant discrepancy between the observed reference value and the datum value.

9. A method according to Claims 7 and 8 wherein the observed reference value and the measured temperature are compared with stored values corresponding to the density of selected liquids over a predetermined range of temperatures to provide an indication of the density of the liquid in the tank and/or its nature.

10. A method according to any one of the preceding claims wherein the output signal is used to derive an indication of the volume or mass of liquid corresponding to the measured depth.

11. A method according to Claim 9 wherein the output signal is applied to a memory device programmed according to the geometry of the tank to provide a volume or mass indication corresponding to the measured depth.

12. Apparatus for determining the level of liquid in a storage tank comprising transducer means (14, 14a,14b,14c) for transmitting pulses (22) of sonic energy into the liquid, characterised by reference reflector means (16,16b) positioned below the maximum permitted level of liquid in the tank so as at least partially to reflect said pulses (22), detector means (14,14a,14b,14c) arranged to receive reflected pulses (24,24a) from the surface of the liquid and reflected pulses (23) from said reflector means (16,16b) when the latter is immersed in the liquid, and timing means (32) to measure the interval between transmission of each pulse and receipt of a corresponding reflected pulse by said detector means.

13. Apparatus according to Claim 12 additionally including a second reference reflector means (16c) positioned near to the bottom of the tank so as at least partially to reflect said pulses (22) when said second reference reflector means is immersed in the liquid.

14. Apparatus according to Claim 12 or Claim 13 wherein the transducer means and detector means (14,14a,14b,14c) are arranged at the lower end of a tube (10,10a,10b,10c) which is immersed in the liquid and is perforated or apertured so as to allow ingress of the liquid.

15. Apparatus according to Claim 14 wherein the or each reflector means comprises a plate (16) which partially obstructs said tube so as partially to reflect pulses from the transducer means to the detector means.

16. Apparatus according to any one of Claims 12 to 15 wherein the transducer means (14,14a,14b,14c) is arranged to serve as both transmitter and receiver.

17. Apparatus according to any one of Claims 12 to 16 wherein a single transducer (14) is utilised to provide a common pulse (22) which is partially reflected from the surface of the liquid and from one or both reference reflectors whilst they remain immersed in the liquid.

18. Apparatus according to any one of Claims 12 to 16 wherein the or each reflector (16b,16c) has a separate transducer (14b,14c) associated therewith, and an additional transducer (14a) is used to generate pulses for reflection from the surface of the liquid.

19. Apparatus according to Claim 18 wherein combined transducer and detector means (14a,14b,14c) are arranged at the lower ends of respective tubes (10a,10b,10c) which are perforated or apertured so as to allow ingress of the liquid, one of said tubes (10a) being unobstructed and the remainder of said tubes (10b,10c) each having a transverse plate (16b16c) which at least partially obstructs said tube so as at least partially to reflect pulses from the respective transducer and thereby serve as said reference reflector means.

20. Apparatus according to Claim 18 wherein two or three separate transducers and one or two appropriately disposed reflectors are arranged within a single tube.

21. Apparatus according to any one of Claims 12 to 20 including a temperature sensor to determine the temperature of liquid in the tank and means for compensating measurements for changes in temperature.

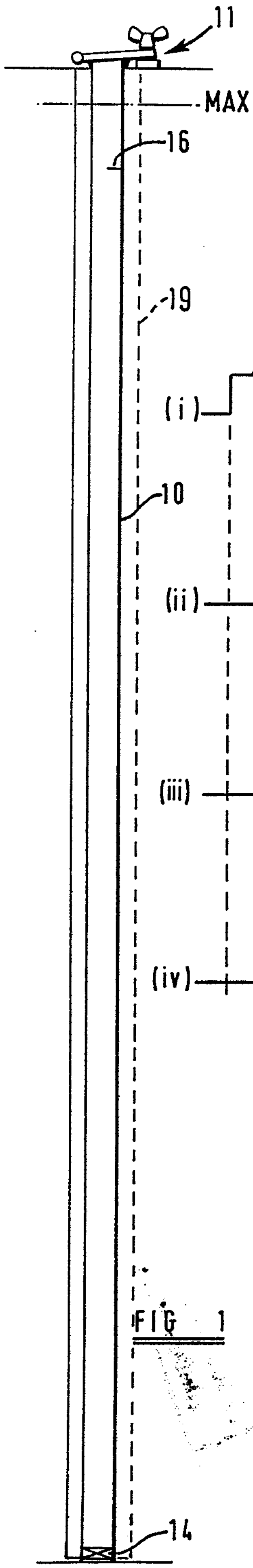


FIG 1

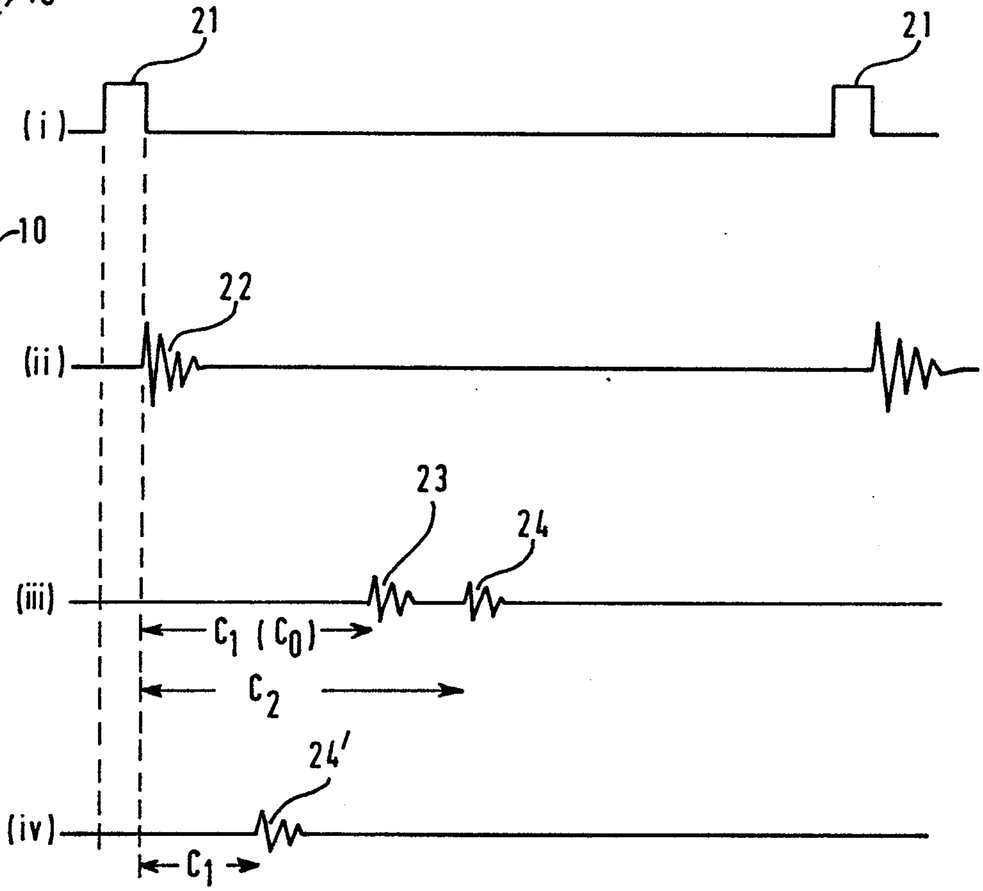


FIG 2

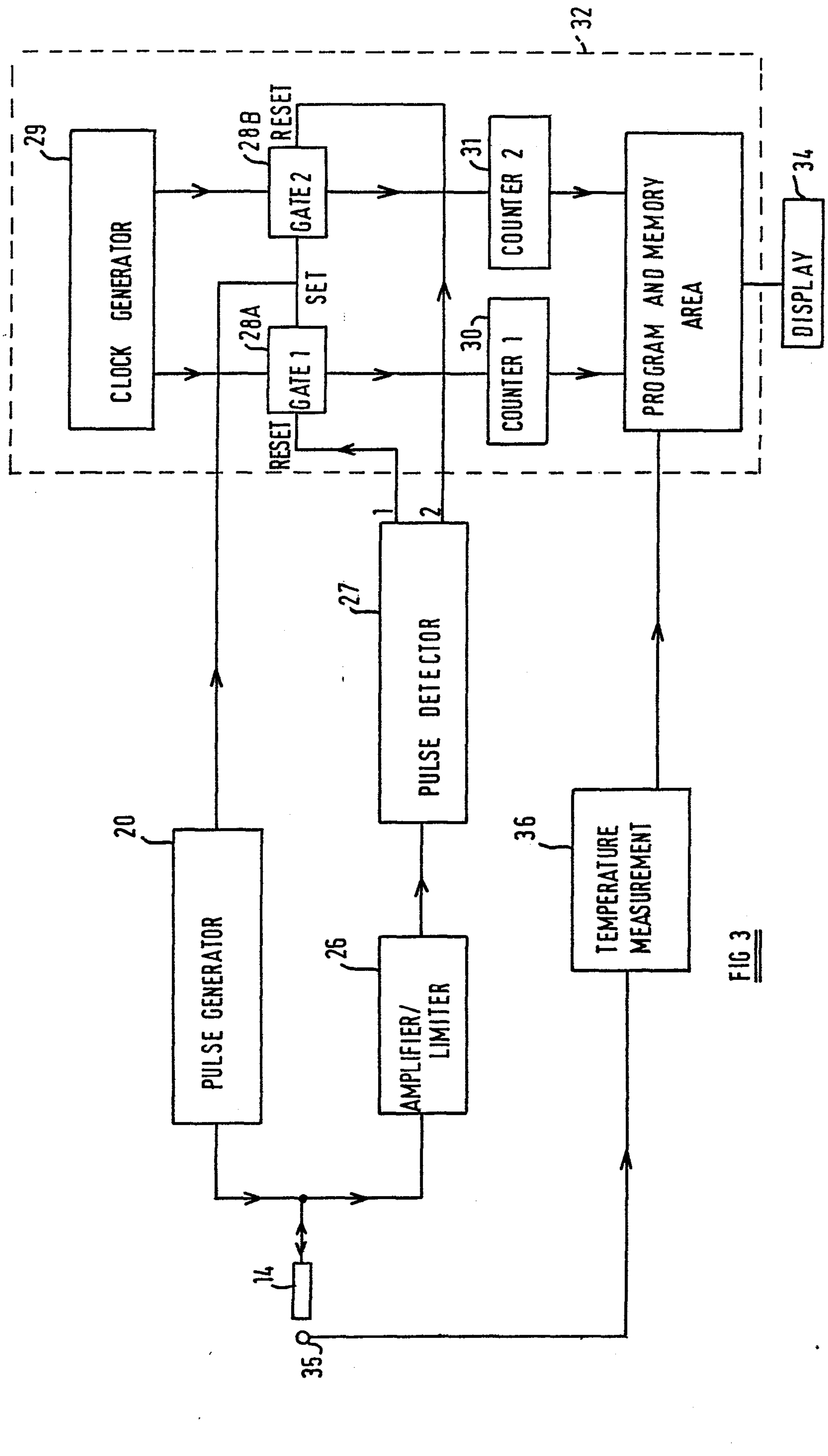
32
29
CLOCK GENERATOR
28B
RESET
GATE 2
SET
28A
GATE 1
RESET
31
COUNTER 2
30
COUNTER 1
PROGRAM AND MEMORY AREA
34
DISPLAY
1
2
27
PULSE DETECTOR
20
PULSE GENERATOR
26
AMPLIFIER/ LIMITER
36
TEMPERATURE MEASUREMENT
14
35

FIG 3

FIG 4

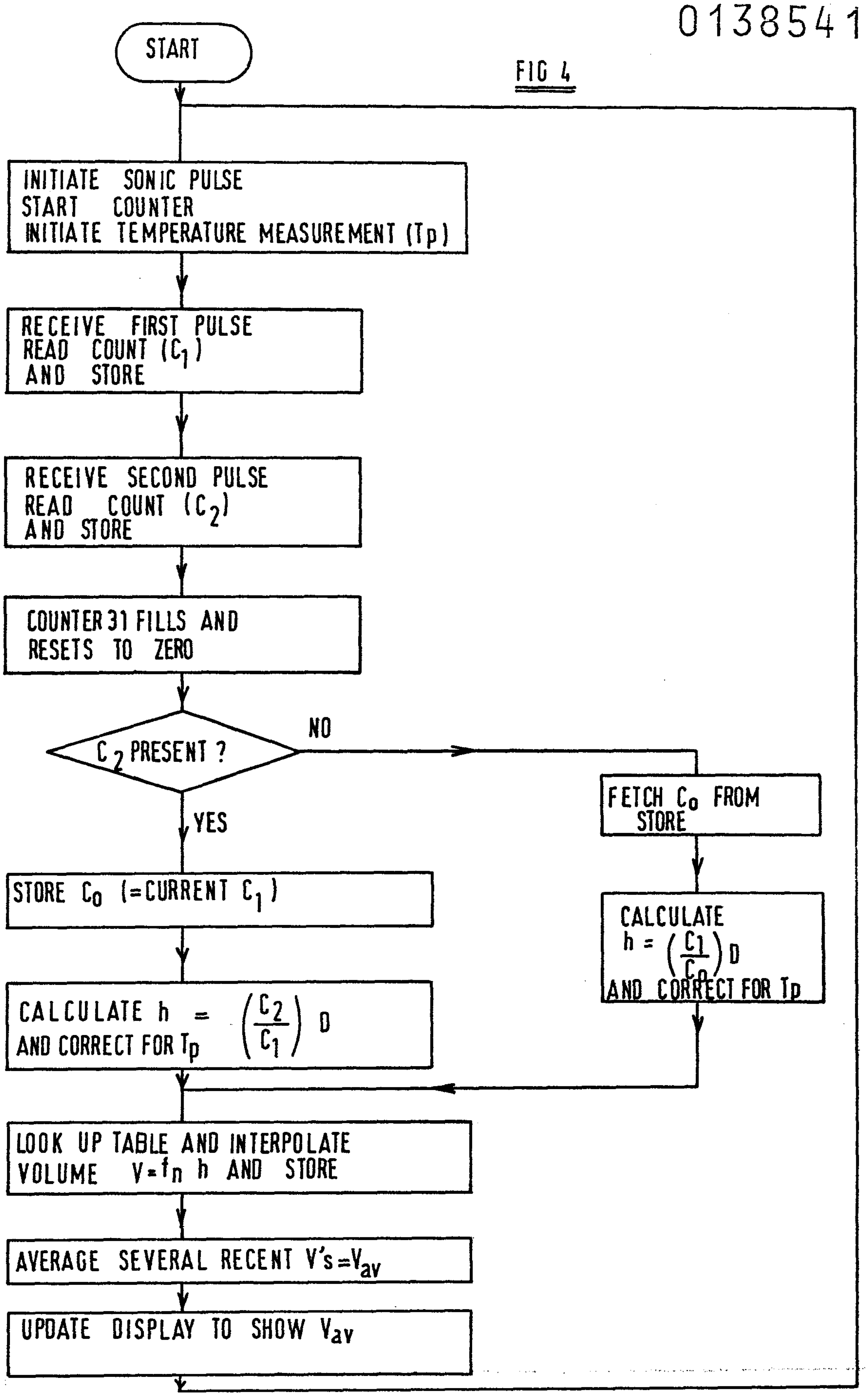
START
INITIATE SONIC PULSE
START COUNTER
INITIATE TEMPERATURE MEASUREMENT (Tp)
RECEIVE FIRST PULSE
READ COUNT (C1)
AND STORE
RECEIVE SECOND PULSE
READ COUNT (C2)
AND STORE
COUNTER 31 FILLS AND
RESETS TO ZERO
C2 PRESENT ?
NO
YES
FETCH Co FROM
STORE
CALCULATE
h = (C1/Co) D
AND CORRECT FOR Tp
STORE Co (=CURRENT C1)
CALCULATE h = (C2/C1) D
AND CORRECT FOR Tp
LOOK UP TABLE AND INTERPOLATE
VOLUME V=fn h AND STORE
AVERAGE SEVERAL RECENT V's=Vav
UPDATE DISPLAY TO SHOW Vav

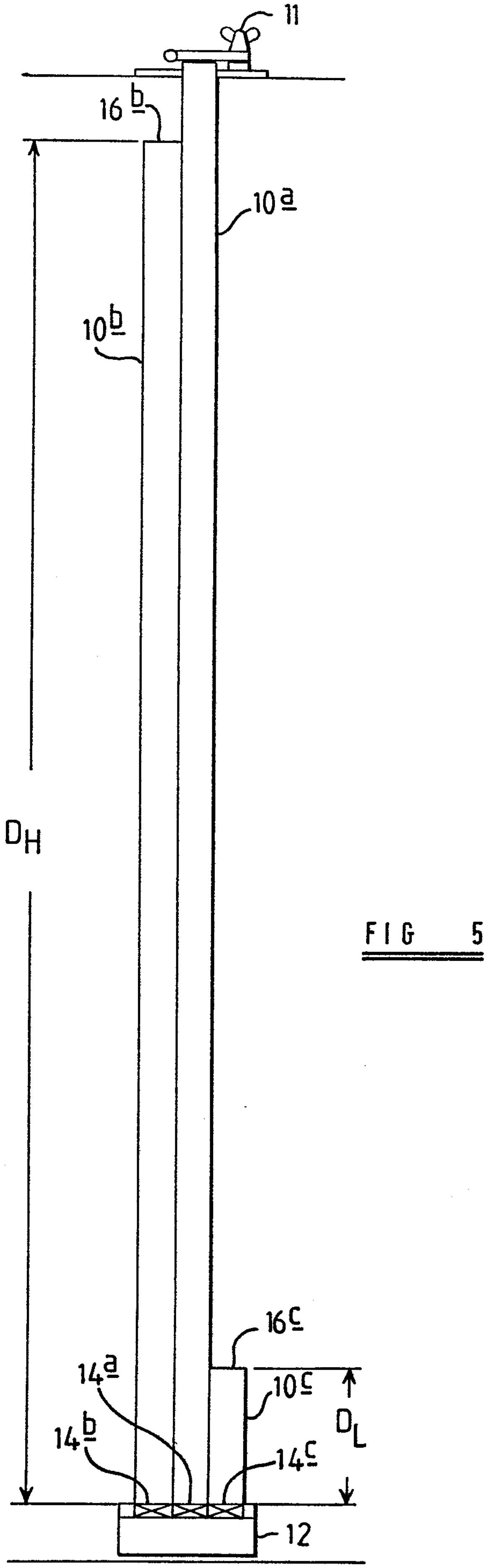


FIG 5

0138541

FIG 6

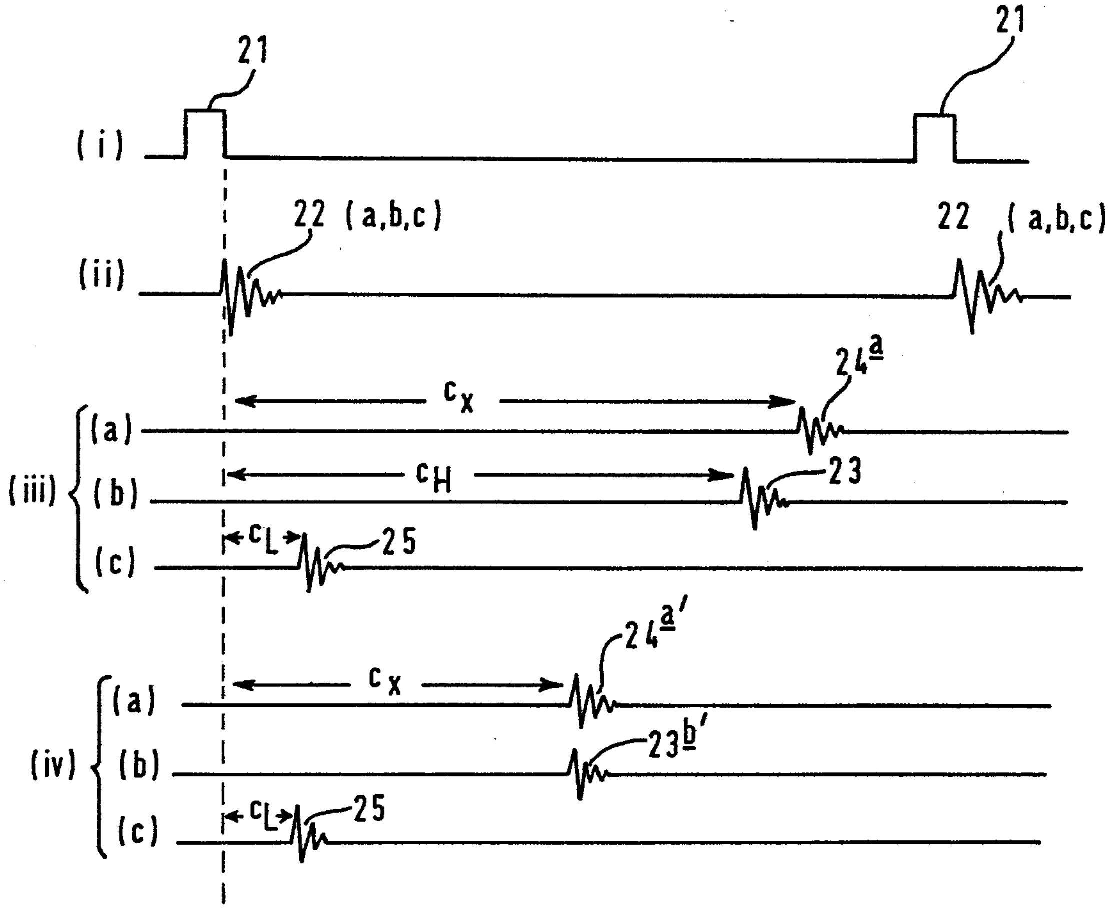

European Patent Office

0138541

Application number

# EUROPEAN SEARCH REPORT

## DOCUMENTS CONSIDERED TO BE RELEVANT

EP 84306837.0

| Category | Citation of document with indication, where appropriate, of relevant passages | Relevant to claim | CLASSIFICATION OF THE APPLICATION (Int. Cl.4) |
|---|---|---|---|
| A,P | EP - A2 - 0 106 677 (GILBARCO) * Claims; fig. 1,2a-c,3 * -- | 1-5,7, 10,11, 12-14, 16,17, 21 | G 01 F 23/28 |
| A | US - A - 4 210 969 (MASSA) * Column 1, lines 34-54; column 2, line 14 - column 4, line 27 * -- | 1,4 | |
| A | US - A - 3 745 829 (FRANCHI) * Fig. 1; column 1, line 49 - column 4, line 32 * -- | 3-5, 12-14, 16 | |
| A | US - A - 4 229 798 (ROSIE) * Column 1, line 63 - column 3, line 3; column 3, line 32 - column 4, line 10 * ---- | 7,9-11,21 | TECHNICAL FIELDS SEARCHED (Int. Cl.4) |
| | | | G 01 F 23/00 |

The present search report has been drawn up for all claims

| Place of search | Date of completion of the search | Examiner |
|---|---|---|
| VIENNA | 18-12-1984 | GRONAU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82